# FASCICULE DE BREVET EUROPEEN

(11) **EP 0 688 990 B1**
(45) Date de publication et mention de la délivrance du brevet: **18.11.1998**
(21) Numéro de dépôt: 95810415.0
(22) Date de dépôt: 21.06.1995
(51) Int. Cl.: F16K 31/06, F16K 39/02

(54) **Valve électromagnétique régulatrice de débit**
Elektromagnetisches Durchflussregelventil
Electromagnetic flow control valve

(30) Priorité: 23.06.1994 CH 2009/94
(43) Date de publication de la demande: 27.12.1995
(73) Titulaire: PARKER LUCIFER SA, 1227 Carouge (Genève) (CH)
(72) Inventeur: Roch, Jean-François, F-74800 La Roche sur Foron (FR)
(74) Mandataire: Meylan, Robert Maurice

(56) Documents cités:
- CH-A- 485 156
- FR-A- 759 503
- FR-A- 1 201 343
- US-A- 4 821 774

## Description

La présente invention a pour objet une valve électromagnétique régulatrice de débit comprenant un corps de valve présentant une entrée, une sortie et un siège de clapet, une bobine entourant un noyau fixe et un noyau mobile définissant un entrefer avec le noyau fixe et portant le clapet, un ressort entourant le noyau mobile et exerçant sur le clapet une force ayant tendance à maintenir ce clapet contre son siège, une membrane solidaire du noyau mobile fermant l'interstice entre le noyau mobile et l'intérieur de la bobine et des moyens d'équilibrage de la pression sur le noyau mobile afin d'équilibrer la valve en position ouverte.

Une telle valve est utilisée, par exemple, dans un dispositif d'alimentation alternative d'un moteur à combustion interne au moyen d'un gaz, tel que décrit dans le brevet US 5 150 685. Sur la base d'un certain nombre de paramètres de fonctionnement du moteur, la valve est commandée électroniquement par des impulsions modulées en largeur qui déterminent le temps d'ouverture et de fermeture de la valve. La fréquence des impulsions est de l'ordre de 50 à 100 Hz et la partie mobile de la valve effectue à chaque période un mouvement complet d'ouverture et de fermeture. Une telle valve est dite battante. Le débit de la valve dépend de son temps d'ouverture, de la pression d'entrée et de la pression de sortie de la valve, du passage de la valve proprement dit, passage dépendant du diamètre des orifices et de la course du noyau mobile. Le temps d'ouverture, exprimé en rapport cyclique, c'est-à-dire le rapport entre la largeur d'impulsion d'excitation de la bobine et la longueur de la période du signal, peut donc être très court. Pour des rapports cycliques proches de 0 %, la largeur d'impulsion devient insuffisante et le noyau mobile ne bouge pas, de telle sorte que la valve reste fermée, alors que pour des rapports cycliques proches de 100 %, la largeur d'impulsion s'avère trop importante pour permettre au noyau mobile de quitter sa position excitée correspondant à la position ouverte de la valve. Dans les autres plages de rapports cycliques, il y a proportionnalité entre la largeur d'impulsion et le temps d'ouverture de la valve, c'est-à-dire le débit. Il convient donc que la plage des rapports cycliques pour laquelle il y a proportionnalité entre la largeur d'impulsion et le temps d'ouverture soit la plus grande possible. Dans tous les cas, la valve battante doit être aussi rapide que possible et présenter une faible inertie.

L'inertie du noyau mobile peut être réduite en réalisant celui-ci partiellement en matière synthétique. Une réponse rapide de la valve à l'ouverture est en outre assurée par l'équilibrage du noyau mobile en position fermée par le ressort agissant sur le clapet et par la membrane par laquelle la pression d'entrée est appliquée au noyau mobile. L'équilibrage rend la valve indépendante des variations de la pression d'entrée, diminue la force sur le noyau mobile pour l'ouverture du siège et assure un temps de réponse rapide. Le noyau mobile est toutefois également soumis à la pression de sortie ainsi qu'à la pression régnant dans l'entrefer. Or, d'une part, la pression de sortie varie en fonction du débit, de la perte de charge sur l'orifice de mesure de la pression de sortie présent dans l'application susmentionnée et de la dépression dans le moteur et, d'autre part, la pression dans l'entrefer varie avec le volume de cet entrefer. Lorsque la valve s'ouvre, le volume de l'entrefer diminue et la pression augmente sur la face correspondante du noyau mobile. On a donc, dans tous les cas, une résultante de force axiale sur le noyau mobile qui varie avec la pression de sortie et avec la position du noyau mobile. La variation de cette force résultante tend à modifier le temps d'ouverture de la vale. Si la variation de la pression dans l'entrefer peut être considérée comme une constante, il n'en est pas de même de la pression de sortie. Il importe donc de rendre le temps d'ouverture de la valve indépendant de la pression de sortie.

Un temps d'ouverture de la valve indépendant de la pression d'entrée et de la pression de sortie est particulièrement important dans l'alimentation d'un moteur à combustion interne de véhicule automobile, car dans un tel contexte le débit de gaz peut varier dans une très grande mesure dans un temps très court et la valve doit assurer à tout instant un débit de gaz respectant des normes anti-pollution de plus en plus sévères.

Il convenait donc de garantir un temps d'ouverture indépendant de la pression de sortie.

Il est connu du document CH-A-485 156, montrant une valve selon le préambule de la revendication 1, de faire communiquer la région aval du clapet et l'intérieur d'un soufflet reliant le clapet à la partie supérieure de la valve portant la bobine et le noyau fixe, par un passage axial à travers le noyau mobile afin d'équilibrer les forces dues à la pression agissant sur les deux faces du clapet de manière à réduire la force d'attraction nécessaire pour déplacer le noyau mobile et compte tenu de l'entrefer important présent dans cette valve. Un jeu important existant entre le noyau mobile et le tube dans lequel il se déplace, l'entrefer communique également avec la région aval du clapet, ce qui a pour effet d'assurer un certain équilibrage des pressions dans l'entrefer et dans la région aval du clapet. Cet équilibrage n'est toutefois pas recherché et le faible jeu du noyau mobile dans son tube se traduit par une perte de charge, c'est-à-dire un retard dans l'équilibrage des pressions.

Un moyen de supprimer ce retard consiste à prolonger le passage axial dans le noyau mobile de manière à faire communiquer directement l'entrefer et la sortie. Les variations du volume de l'entrefer n'ont alors plus d'influence sur le déplacement du noyau mobile. Une communication directe entre l'entrefer et la région aval du clapet dans une valve destinée à être utilisée pour du gaz naturel présente toutefois un inconvénient en raison des impuretés que l'on trouve dans le gaz naturel. Les impuretés ont en effet tendance à pénétrer et à s'accumuler dans l'entrefer en raison de l'effet de pompage produit par la variation du volume de l'entrefer, ce qui a pour effet de perturber la course du noyau mobile et par conséquent celle du clapet.

L'invention a pour but d'assurer un équilibrage de la pression dans l'entrefer sans que les impuretés puissent pénétrer dans l'entrefer.

Ce problème est résolu par la valve selon l'invention définie à la revendication 1.

Le membrane présente, de préférence, au moins une ondulation circulaire de manière à minimiser les contraintes lors de son déplacement.

Le dessin annexé représente, à titre d'exemple, une forme d'exécution de l'invention.

La figure 1 est une vue en perspective de la valve.

La figure 2 est une vue en coupe axiale de la valve représentée à la figure 1.

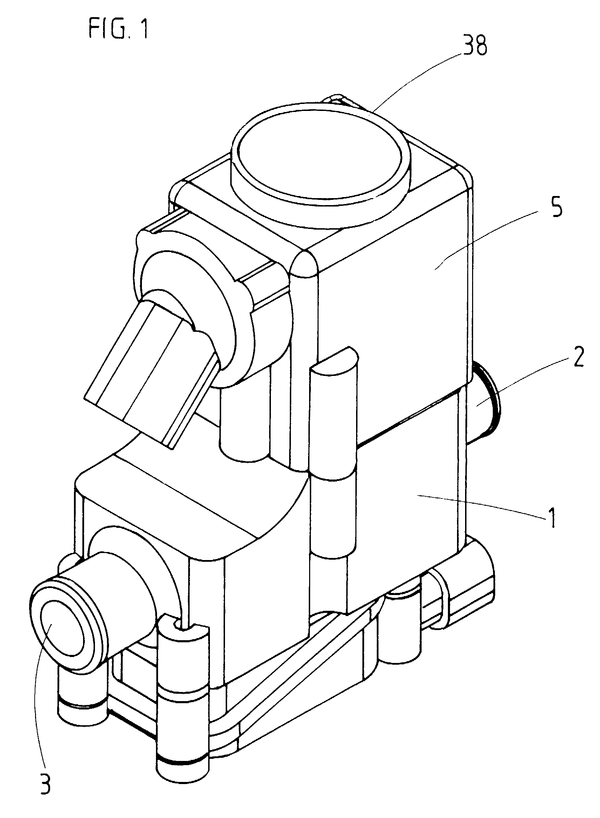

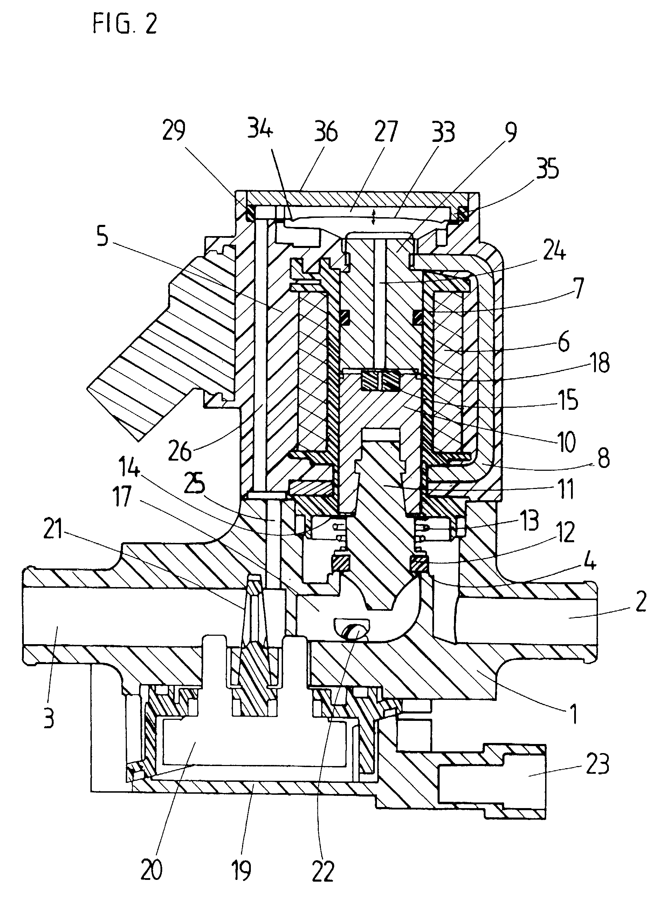

La valve représentée aux figures 1 et 2 comprend un corps de valve 1 en matière plastique présentant une entrée 2, une sortie 3 et un siège de clapet 4. Sur ce corps de valve 1 est fixé un corps de bobine 5 en matière plastique surmoulé sur une bobine 6 bobinée sur un support de bobine 7. La bobine est munie d'une armature 8 dans laquelle est vissé un noyau fixe 9. Dans l'alésage cylindrique du support de bobine 7 est monté un noyau mobile 10 sur lequel est fixé un porte-clapet 11 en matière synthétique qui porte un clapet 12 également en matière synthétique, coopérant avec le siège de clapet 4 pour la fermeture de la valve. Le clapet 12 est de forme annulaire et déborde de la circonférence du porte-clapet 11. Un ressort hélicoïdal 13 travaille en compression entre le clapet 12 et l'extrémité inférieure du support de bobine 7. Ce ressort 13 a donc tendance à maintenir le clapet en position fermée contre son siège 4. L'interstice entre le noyau mobile 10 et le support de bobine 7 est fermé par une membrane 14 fixée au noyau mobile. Cette membrane 14 isole la région amont du clapet 12 du noyau mobile 10. Le noyau mobile 10 est en outre muni d'un amortisseur 15 constitué d'un plot en matière plastique fixé dans un logement du noyau mobile. Cet amortisseur a non seulement pour rôle d'amortir le choc du noyau mobile 10 contre le noyau fixe 9, mais également de maintenir un entrefer empêchant un collage magnétique du noyau mobile contre le noyau fixe.

Le diamètre équivalent de la membrane 13 est égal au diamètre équivalent du clapet de manière à réaliser un équilibrage de la pression d'entrée en 2 sur le noyau mobile.

La pression dans l'entrefer 18 est donc toujours égale à la pression dans la région aval 17, pression qui varie avec la pression de sortie, de telle sorte que le noyau mobile 10 est en équilibre, en ce qui concerne la pression de sortie et que la variation de cette pression de sortie n'a pas d'influence sur le noyau mobile.

Une ouverture rapide de la valve peut être obtenue en faisant passer un courant suffisamment élevé dans la bobine 6. La fermeture de la valve dépend par contre exclusivement de la force du ressort 13, de l'inertie du noyau mobile et des frottements. Le ressort 13 devant toutefois être aussi faible que possible pour ne pas retarder l'ouverture de la valve, c'est donc l'inertie qui est essentielle. Une faible inertie associée à l'équilibrage du noyau mobile permet à ce dernier de se déplacer très rapidement et à une fréquence élevée.

La valve représentée comprend en outre une boîte de capteurs 19 fixée sur le corps de valve 1 et contenant un capteur de pression 20 muni d'un diaphragme 21 placé dans le conduit de sortie 3 et un capteur de température 22. La boîte de capteurs 19 est muni d'un connecteur 23.

Le noyau fixe 9 présente un passage axial 24 et le corps de valve 1 présente un passage 25 parallèle au noyau mobile 11 et reliant la région aval 17 à un passage 26 ménagé dans le corps de bobine 5 parallèlement à la bobine et débouchant dans la partie supérieure du corps de bobine 5. Cette partie supérieure présente un espace cylindrique 27 fermé de manière étanche vers l'extérieur par une plaque de fermeture 36 et une garniture d'étanchéité 29 et du côté intérieur par une membrane vibrante 33. Cette membrane 33 est une membrane roulante, c'est-à-dire présentant au moins une ondulation circulaire 34 à la manière des membranes de haut-parleurs. La membrane 33 est pincée par sa partie marginale entre le corps de bobine 5 et une couronne 35 constituée d'une nervure de la plaque de fermeture 36. La membrane 33 se déplace de telle sorte que son débattement compense la variation de volume de l'espace constitué du passage 24 et de l'entrefer 18 en raison de la variation de l'entrefer 18 et que la pression dans l'entrefer 18 est pratiquement toujours égale à la pression dans la région aval 17. L'utilisation d'une membrane roulante permet de minimiser les contraintes de traction résultant des deux positions extrêmes de la membrane. Le débattement de la membrane est calculé pour compenser la variation du volume. Son épaisseur définit sa rigidité en rapport avec un ΔP d'environ 0,6 bar.

## Revendications

1. Valve électromagnétique régulatrice de débit comprenant un corps de valve (1) présentant une entrée (2), une sortie(3) et un siège de clapet (4), une bobine (6) entourant un noyau fixe (9) et un noyau mobile (10) définissant un entrefer (18) avec le noyau fixe et portant le clapet (12), un ressort (13) entourant le noyau mobile et exerçant sur le clapet une force ayant tendance à maintenir ce clapet contre son siège, une membrane (14) solidaire du noyau mobile fermant l'interstice entre le noyau mobile et l'intérieur de la bobine et des moyens d'équilibrage de la pression sur le noyau mobile (10) afin d'équilibrer la valve en position ouverte, caractérisée en ce que les moyens d'équilibrage sont constitués d'un conduit latéral (25, 26) ménagé dans le corps de valve et débouchant du côté (27) du noyau fixe opposé à l'entrefer, d'un passage (24) à travers le noyau fixe s'étendant d'une extrémité à l'autre de ce noyau fixe, et d'une membrane vibrante (33) disposée entre le passage (24) à travers le noyau fixe et le conduit latéral (25, 26).

2. Valve selon la revendication 1, caractérisée en ce que la membrane (33) ferme l'entrée du passage (24) à travers le noyau fixe et qu'elle est maintenue par pincement de son bord par une couronne (35).

3. Valve selon la revendication 2, caractérisée en ce que la partie marginale de la membrane circulaire (33) présente au moins une ondulation circulaire (34) de manière à minimiser les contraintes mécaniques lors du déplacement de la membrane.

## Patentansprüche

1. Elektromagnetisches Durchflussregelventil mit einem Ventilkörper, der einen Eingang (2), einen Ausgang (3) und einen Klappensitz (4) aufweist, mit einer einen festen Kern (9) umgebenden Spule (6) und mit einem beweglichen Kern (10), der mit dem festen Kern einen Luftspalt(18)definiert und die Klappe (12) trägt, mit einer Feder (13), die den beweglichen Kern umgibt und auf die Klappe eine Kraft ausübt, welche diese Klappe gegen ihren Sitz zu halten sucht, mit einer Membran (14), die fest am beweglichen Kern angebracht ist und den Zwischenraum zwischen dem beweglichen Kern und dem Inneren der Spule verschliesst, und mit Mitteln zum Ausgleich des auf den beweglichen Kern (10) wirkenden Drucks, um das Ventil in offener Stellung auszugleichen, dadurch gekennzeichnet, dass die Mittel zum Ausgleich aus einer seitlichen Leitung (25, 26), die im Ventilkörper vorgesehen ist und an der dem Luftspalt gegenüberliegenden Seite(27) des festen Kerns mündet, aus einem den festen Kern durchquerenden Durchlass, der sich vom einen zum anderen Ende dieses festen Kerns erstreckt, und aus einer schwingungsfähigen Membran (33) bestehen, die zwischen dem den festen Kern durchquerenden Durchlass (24) und der seitlichen Leitung (25, 26) angeordnet ist.

2. Ventil nach Anspruch 1, dadurch gekennzeichnet, dass die Membran (33) den Eingang des den festen Kern durchquerenden Durchlasses (24) verschliesst und dass sie durch Einklemmen ihres Randes mittels eines Rings (35)gehalten wird.

3. Ventil nach Anspruch 2, dadurch gekennzeichnet, dass der Randbereich der kreisförmigen Membran (33) wenigstens eine kreisförmige Welligkeit (34) derart aufweist, dass die mechanischen Beanspruchungen bei der Bewegung der Membran minimiert werden.

## Claims

1. Flow regulating electromagnetic valve comprising a valve body (1) having an input (2), an output (3) and a flap seat (4), a coil (6) surrounding a fixed core (9) and a movable core (10) defining an air gap (18) with the fixed core and carrying the flap (12), a spring (13) surrounding the mobile core and applying a force on the flap which maintains said flap against its seat, a membrane (14) attached to the mobile core closing the interstice between the mobile core and the inner of the coil and balance means for the pressure on the mobile core (10) for balancing the valve in open position, characterised in that balance means are constituted by a lateral channel (25,26) provided in the body of the valve and opening into the side of the fixed core which is opposite to the air gap, a passage (24) through the fixed core extending from one end to the other of said fixed core, and a vibrating membrane (33) place between the passage (24) through the fixed core and the lateral channel (25,26).

2. Valve according to claim 1, characterised in that the membrane (33) closes the passage (24) through the fixed core and in that it is fixed by pinching of its border by a ring (35).

3. Valve according to claim 2, characterised in that the marginal part of the circular membrane (33) comprises at least a circular undulation for minimising the mechanical stress during displacement of the membrane.
